(19) Europäisches Patentamt
European Patent Office
Office européen des brevets

(11) **EP 4 810 683 A1**

(12) **EUROPEAN PATENT APPLICATION**
published in accordance with Art. 153(4) EPC

(43) Date of publication:
**23.09.2026 Bulletin 2026/39**

(21) Application number: **24913577.3**

(22) Date of filing: **06.12.2024**

(51) International Patent Classification (IPC):
***D04H 3/011*** *(2012.01)* ***D04H 3/147*** *(2012.01)*
***D04H 3/018*** *(2012.01)* ***D01D 5/34*** *(2006.01)*
***D01F 6/62*** *(2006.01)* ***B01D 39/16*** *(2006.01)*
***D06C 15/02*** *(2006.01)*

(52) Cooperative Patent Classification (CPC):
**B01D 39/16; D01D 5/34; D01F 6/62; D04H 3/011; D04H 3/018; D04H 3/147; D06C 15/02**

(86) International application number:
**PCT/KR2024/019957**

(87) International publication number:
**WO 2025/143634 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.12.2023 KR 20230193541**
**25.11.2024 KR 20240169672**

(71) Applicant: **Kolon Industries, Inc.**
**Seoul 07793 (KR)**

(72) Inventors:
- **JANG, Jung-soon**
  **Seoul 07793 (KR)**
- **LEE, Min-ho**
  **Seoul 07793 (KR)**
- **CHO, Hee-jung**
  **Seoul 07793 (KR)**
- **PARK, Young-shin**
  **Seoul 07793 (KR)**
- **CHOI, Woo-seok**
  **Seoul 07793 (KR)**
- **KANG, Dong-heon**
  **Seoul 07793 (KR)**
- **KIM, Min-hyeok**
  **Seoul 07793 (KR)**

(74) Representative: **Vossius & Partner**
**Patentanwälte Rechtsanwälte mbB**
**Siebertstraße 3**
**81675 München (DE)**

(54) **SPUNBOND NON-WOVEN FABRICS FOR FILTER, AND METHOD FOR PREPARING SAME**

(57) The present invention relates to a spunbond nonwoven fabric for a filter and a method for preparing the same. According to the present invention, there is provided a spunbond nonwoven fabric for a filter exhibiting high stiffness despite a low weight per unit area, and a method for preparing the same.



Processed by Luminess, 75001 PARIS (FR)

## Description

### [TECHNICAL FIELD]

The present invention relates to a spunbond nonwoven fabric for a filter and a method for preparing the same.

### [BACKGROUND OF ART]

A filter is a material or device that separates another phase from a gas or liquid containing the other phase by creating a pressure difference across a partition through which the gas or liquid passes.

In general, a nonwoven fabric is used for a filter. In particular, a spunbond nonwoven fabric is widely applied to various industrial fields, including filters, due to its high productivity and favorable mechanical properties.

The performance of a nonwoven fabric for a filter may vary depending on various factors constituting the nonwoven fabric. For example, the performance of the nonwoven fabric for a filter may vary depending on the thickness of the nonwoven fabric, the weight per unit area, and the fineness of filaments constituting the nonwoven fabric.

In general, a nonwoven fabric for a filter is required to have high strength and stiffness sufficient to withstand a load generated during filtration.

The stiffness of the nonwoven fabric increases as the weight per unit area and the thickness of the nonwoven fabric increase. However, this not only increases the cost of the nonwoven fabric but also leads to inefficient use of space in the filter.

When emphasis is placed on filtration efficiency of the nonwoven fabric for a filter, pressure loss increases and air permeability or liquid permeability decreases, thereby tending to shorten the service life. Conversely, when emphasis is placed on air permeability or liquid permeability of the nonwoven fabric for a filter, the service life tends to increase, but the filtration efficiency tends to decrease.

In addition, in the case of a nonwoven fabric produced by separately spinning a matrix filament and a binder filament and intermingling them, only intersections of the binder filament are fixed, and thus there is a limitation in securing high stiffness.

### [DETAILED DESCRIPTION OF THE INVENTION]

### [Technical Problem]

The present invention has been made to provide a spunbond nonwoven fabric for a filter having high stiffness while having a low weight per unit area.

The present invention has also been made to provide a method for preparing the spunbond nonwoven fabric for a filter.

### [Technical Solution]

According to one embodiment of the present invention, there is provided a spunbond nonwoven fabric for a filter, comprising:

a fiber web comprising core-in-sheath type filaments,
wherein the core-in-sheath type filaments comprise
a core part comprising a first polyester having a melting point of 250 °C or higher, and
a sheath part comprising a second polyester having a melting point in a range of 160 °C to 235 °C,
wherein the core-in-sheath type filaments comprise the core part and the sheath part in a weight ratio in a range of 65:35 to 85:15, and
wherein the second polyester has an intrinsic viscosity (I.V.) higher than that of the first polyester by a value in a range of 0.05 dl/g to 0.1 dl/g.

According to another embodiment of the present invention, there is provided a method for preparing the spunbond nonwoven fabric for a filter, the method comprising:

obtaining core-in-sheath type filaments comprising a core part comprising a first polyester and a sheath part comprising a second polyester by conjugate-spinning a first polyester having a melting point of 250 °C or higher and a second polyester having a melting point in a range of 160 °C to 235 °C;
forming a fiber web by depositing the core-in-sheath type filaments on a net conveyor; and

forming a spunbond nonwoven fabric by performing heat treatment of the fiber web under pressure,
wherein the core-in-sheath type filaments comprise the core part and the sheath part in a weight ratio in a range of 65:35 to 85:15, and
wherein the second polyester has an intrinsic viscosity (I.V.) higher than that of the first polyester by a value in a range of 0.05 dl/g to 0.1 dl/g.

Hereinafter, a spunbond nonwoven fabric for a filter and a method for preparing the same according to embodiments of the present invention will be described in more detail.

Unless otherwise explicitly stated herein, technical terms are used only for describing specific embodiments and are not intended to limit the present invention.

As used herein, singular forms include plural forms unless the context clearly indicates otherwise.

As used herein, the term "comprising" specifies the presence of stated features, regions, integers, steps, operations, elements, and/or components, but does not exclude the presence or addition of one or more other features, regions, integers, steps, operations, elements, components, and/or groups thereof.

As used herein, the term "core-in-sheath type filaments" refers to filaments having a structure including a core part and a sheath part surrounding an outer peripheral surface of the core part, wherein the core part and the sheath part comprise polymers of the same or different compositions.

As used herein, terms including ordinal numbers such as "first" and "second" are used only for distinguishing one component from another component and are not intended to limit the components. For example, within the scope of the present invention, a first component may be referred to as a second component, and similarly, a second component may be referred to as a first component.

As used herein, "denier" is a unit of fineness based on a mass (in grams) per 9000 meters of length of a single fiber strand. For example, 1 denier may be expressed as 1 g/9000 m, or 0.11 mg/m, or 0.11 tex.

As used herein, "room temperature" refers to a temperature in a range of 15 °C to 30 °C. Specifically, within the temperature range, room temperature may be at least 15 °C, or at least 16 °C, or at least 17 °C, or at least 18 °C, or at least 19 °C, or at least 20 °C; and may be at most 30 °C, or at most 29 °C, or at most 28 °C, or at most 27 °C, or at most 26 °C.

Unless otherwise specifically defined herein, a temperature at which measurement or evaluation of numerical properties is performed may be the room temperature.

According to one embodiment of the present invention, there is provided a spunbond nonwoven fabric for a filter, comprising:

a fiber web comprising core-in-sheath type filaments,
wherein the core-in-sheath type filaments comprise
a core part comprising a first polyester having a melting point of 250 °C or higher, and
a sheath part comprising a second polyester having a melting point in a range of 160 °C to 235 °C,
wherein the core-in-sheath type filaments comprise the core part and the sheath part in a weight ratio in a range of 65:35 to 85:15, and
wherein the second polyester has an intrinsic viscosity (I.V.) higher than that of the first polyester by a value in a range of 0.05 dl/g to 0.1 dl/g.

In general, the stiffness of a nonwoven fabric increases as the weight per unit area and the thickness of the nonwoven fabric increase. However, this increases the cost of the nonwoven fabric and leads to inefficient use of space in a filter.

As a result of studies conducted by the present inventors, it has been confirmed that a spunbond nonwoven fabric for a filter satisfying the above-described embodiment has high stiffness while having a low weight per unit area, and thus may be suitably used as a filter medium and a filter support. The spunbond nonwoven fabric for a filter exhibits excellent air permeability and a high quality factor as well as high stiffness, thereby may contribute to improving filter performance in various fields.

The spunbond nonwoven fabric for a filter may be preferably used as a filter medium and a filter support in an air cleaning system and an air conditioning (HVAC) system.

According to one embodiment of the present invention, the spunbond nonwoven fabric for a filter comprises a fiber web comprising core-in-sheath type filaments.

The core-in-sheath type filaments have a structure including a core part and a sheath part surrounding an outer peripheral surface of the core part, wherein polymers having the same or different compositions may be included in the core part and the sheath part.

Preferably, in order to secure mechanical properties of the core-in-sheath type filaments, a polyester having a relatively high melting point may be applied to the core part. In addition, in order to impart sufficient bonding and fixation to the fiber web comprising the core-in-sheath type filaments, a polyester having a relatively low melting point may be applied

to the sheath part.

Specifically, the core-in-sheath type filaments include a core part comprising a first polyester having a melting point of 250 °C or higher and a sheath part comprising a second polyester having a melting point in a range of 160 °C to 235 °C.

The first polyester preferably has a melting point of 250 °C or higher, or in a range of 250 °C to 265 °C, or 250 °C to 260 °C, or 255 °C to 260 °C.

For example, the first polyester may be at least one selected from the group consisting of polyethylene terephthalate, polyethylene naphthalate, polybutylene terephthalate, polytetrafluoroethylene, and copolymers thereof, each satisfying the above melting point range.

The second polyester preferably has a melting point in a range of 160 °C to 235 °C, or 180 °C to 235 °C, or 180 °C to 230 °C, or 200 °C to 230 °C.

For example, the second polyester may be at least one selected from the group consisting of polyethylene terephthalate, polyethylene naphthalate, polybutylene terephthalate, polytetrafluoroethylene, and copolymers thereof, each satisfying the above melting point range.

As another example, the second polyester may be a copolyester or a polyamide-based resin, each satisfying the above melting point range. The copolyester may be a polyester obtained by copolymerizing adipic acid, isophthalic acid, and neopentyl glycol. The polyamide-based resin may be at least one selected from the group consisting of nylon 6, nylon 66, nylon 46, nylon 11, nylon 12, nylon 610, nylon 612, and a nylon 6/66 copolymer.

According to one embodiment of the present invention, the second polyester preferably has an intrinsic viscosity (I.V.) higher than that of the first polyester by a value in a range of 0.05 dl/g to 0.1 dl/g. Here, the intrinsic viscosity of the polyester may be a value measured at room temperature.

In order to sufficiently achieve the effects according to the embodiment, the second polyester preferably has an intrinsic viscosity higher than that of the first polyester by 0.05 dl/g or more. However, when the difference in intrinsic viscosity between the first polyester and the second polyester is excessively large, it may be difficult to manufacture the core-in-sheath type filaments through melt spinning, and mechanical properties of the filaments may be deteriorated. Accordingly, the second polyester preferably has an intrinsic viscosity higher than that of the first polyester, with the difference being 0.1 dl/g or less.

Specifically, the second polyester has an intrinsic viscosity higher than that of the first polyester, with the difference being 0.05 dl/g or more, or in a range of 0.05 dl/g to 0.1 dl/g, or in a range of 0.06 dl/g to 0.1 dl/g, or in a range of 0.06 dl/g to 0.09 dl/g.

According to one embodiment of the present invention, the first polyester may have an intrinsic viscosity in a range of 0.65 dl/g to 0.75 dl/g, or 0.65 dl/g to 0.74 dl/g, or 0.65 dl/g to 0.73 dl/g, or 0.65 dl/g to 0.72 dl/g.

In addition, the second polyester may have an intrinsic viscosity in a range of 0.70 dl/g to 0.85 dl/g, or 0.70 dl/g to 0.84 dl/g, or 0.70 dl/g to 0.83 dl/g, or 0.70 dl/g to 0.82 dl/g, or 0.70 dl/g to 0.80 dl/g, or 0.70 dl/g to 0.75 dl/g, while satisfying the above-described intrinsic viscosity condition relative to the first polyester.

As a non-limiting example, the intrinsic viscosities of the polyesters may be adjusted to a required range depending on conditions of a solid-state polymerization reaction for obtaining the polyesters.

According to one embodiment of the present invention, the core-in-sheath type filaments preferably comprise the core part and the sheath part in a weight ratio in a range of 65:35 to 85:15.

In order to impart sufficient bonding strength to the fiber web comprising the core-in-sheath type filaments while sufficiently achieving the effects according to the embodiment, the sheath part preferably has a content of 15 wt% or more based on the total weight of the core part and the sheath part. However, when the content of the sheath part is excessively high, spinnability of the filaments may be deteriorated, and as the content of the core part is relatively reduced, mechanical properties of the filaments may be deteriorated. Accordingly, the sheath part preferably has a content of 35 wt% or less, or 30 wt% or less, or 25 wt% or less based on the total weight of the core part and the sheath part.

Specifically, in the core-in-sheath type filaments, the weight ratio of the core part to the sheath part may be in a range of 65:35 to 85:15, or 70:30 to 85:15, or 75:25 to 85:15.

According to one embodiment of the present invention, the core-in-sheath type filaments preferably have a fineness in a range of 2 denier to 5 denier.

In order to maintain the core-in-sheath structure during a spinning process of the filament and to ensure an appropriate level of air permeability in the nonwoven fabric, the filament preferably have a fineness of 2 denier or more. However, in order to prevent deterioration in spinnability and processability, such as pack leakage, the filament preferably have a fineness of 5 denier or less.

Specifically, the core-in-sheath type filaments may have a fineness in a range of 2.0 to 5.0 denier, or 2.5 to 5.0 denier, or 2.5 to 4.5 denier, or 2.5 to 4.0 denier, or 2.5 to 3.5 denier.

According to one embodiment of the present invention, the spunbond nonwoven fabric for a filter preferably has an apparent density in a range of 0.30 g/cm$^3$ to 0.38 g/cm$^3$.

The apparent density of the spunbond nonwoven fabric for a filter may be calculated according to the following

equation:

[Apparent density (g/cm$^3$)] = [weight per unit area (g/m$^2$)] / [thickness (mm)] / 1000

In order to ensure an appropriate level of mechanical properties and compactness of the spunbond nonwoven fabric for a filter, the spunbond nonwoven fabric for a filter preferably has an apparent density of 0.30 g/cm$^3$ or more. However, when the apparent density is excessively high, pressure loss may increase, thereby leading to a decrease in air permeability and a reduction in service life. Accordingly, the spunbond nonwoven fabric for a filter preferably has an apparent density of 0.38 g/cm$^3$ or less.

Specifically, the spunbond nonwoven fabric for a filter may have an apparent density in a range of 0.30 g/cm$^3$ to 0.38 g/cm$^3$, or 0.32 g/cm$^3$ to 0.38 g/cm$^3$, or 0.32 g/cm$^3$ to 0.36 g/cm$^3$.

By satisfying the above-described characteristics, the spunbond nonwoven fabric for a filter may have high stiffness and high air permeability while maintaining a low weight per unit area.

According to one embodiment of the present invention, the spunbond nonwoven fabric for a filter may have a weight per unit area in a range of 130 g/m$^2$ to 170 g/m$^2$.

In order to ensure an appropriate level of mechanical properties, the spunbond nonwoven fabric for a filter preferably has a weight per unit area of 130 g/m$^2$ or more. As the weight per unit area and thickness of the nonwoven fabric increase, stiffness of the nonwoven fabric increases; however, this not only increases the cost of the nonwoven fabric but also results in inefficient use of space in a filter. Accordingly, the spunbond nonwoven fabric for a filter preferably has a weight per unit area of 170 g/m$^2$ or less.

Specifically, the spunbond nonwoven fabric for a filter may have a weight per unit area in a range of 130 g/m$^2$ to 170 g/m$^2$, or 130 g/m$^2$ to 160 g/m$^2$, or 130 g/m$^2$ to 150 g/m$^2$, or 135 g/m$^2$ to 150 g/m$^2$, or 135 g/m$^2$ to 145 g/m$^2$.

According to one embodiment of the present invention, the spunbond nonwoven fabric for a filter may have a stiffness of 1000 mgf or more. The spunbond nonwoven fabric for a filter may have a stiffness of 1000 mgf or more in at least one of the machine direction and the cross direction.

In order to ensure sufficient filter performance, the spunbond nonwoven fabric for a filter preferably has a stiffness of 1000 mgf or more. However, when the stiffness is excessively high, a quality factor of the spunbond nonwoven fabric for a filter may be decreased. Accordingly, the spunbond nonwoven fabric for a filter preferably has a stiffness of 1300 mgf or less.

Specifically, the spunbond nonwoven fabric for a filter may have a stiffness of 1000 mgf or more, or in a range of 1000 mgf to 1300 mgf, or 1010 mgf to 1300 mgf, or 1010 mgf to 1250 mgf.

According to one embodiment of the present invention, the spunbond nonwoven fabric for a filter may have an air permeability of at least 30 cm$^3$/cm$^2$/sec, as measured according to ASTM D737-18(2023).

Specifically, the spunbond nonwoven fabric for a filter may have an air permeability of at least 30 cm$^3$/cm$^2$/sec, or in a range of 30 to 85 cm$^3$/cm$^2$/sec, or 40 to 85 cm$^3$/cm$^2$/sec, or 50 to 85 cm$^3$/cm$^2$/sec, or 60 to 85 cm$^3$/cm$^2$/sec, or 65 to 85 cm$^3$/cm$^2$/sec, or 67 to 80 cm$^3$/cm$^2$/sec.

As a non-limiting example, the spunbond nonwoven fabric for a filter, under a weight per unit area of 135 $\pm$ 5 g/m$^2$, may have a stiffness in a range of 1000 to 1300 mgf, or 1050 to 1300 mgf, or 1050 to 1250 mgf; and an air permeability in a range of 30 to 85 cm$^3$/cm$^2$/sec, or 40 to 85 cm$^3$/cm$^2$/sec, or 50 to 85 cm$^3$/cm$^2$/sec, or 60 to 85 cm$^3$/cm$^2$/sec, or 65 to 85 cm$^3$/cm$^2$/sec.

According to another embodiment of the present invention, there is provided a method for preparing a spunbond nonwoven fabric for filters, the method comprising:

obtaining core-in-sheath type filaments comprising a core part comprising a first polyester and a sheath part comprising a second polyester, by conjugate-spinning a first polyester having a melting point of 250 °C or higher and a second polyester having a melting point in a range of 160 °C to 235 °C;
forming a fiber web by depositing the core-in-sheath type filaments on a net conveyor; and
forming a spunbond nonwoven fabric by heat-treating the fiber web under pressure,
wherein the core-in-sheath type filaments comprise the core part and the sheath part in a weight ratio in a range of 65:35 to 85:15, and
wherein the second polyester has an intrinsic viscosity (I.V.) higher than that of the first polyester by a value in a range of 0.05 dl/g to 0.1 dl/g.

According to one embodiment of the present invention, the spunbond nonwoven fabric for a filter may be prepared by melt-spinning a first polyester and a second polyester to form a fiber web comprising core-in-sheath type filaments, and heat-treating the fiber web under pressure.

In the method for preparing the spunbond nonwoven fabric for a filter, characteristics of the first polyester, the

second polyester, and the core-in-sheath type filaments are the same as those described above.

According to one embodiment of the present invention, the first polyester and the second polyester may be independently melted and then conjugate-spun through a core-in-sheath type spinneret to form the core-in-sheath type filaments.

In the spinning process, a weight ratio of the core part comprising the first polyester to the sheath part comprising the second polyester is preferably controlled in a range of 65:35 to 85:15.

In the spinning process, a spinning speed and a tension may be controlled such that the core-in-sheath type filaments have a fineness in a range of 2 denier to 5 denier.

As an example, the obtaining of the core-in-sheath type filaments may be performed at a spinning speed in a range of 4000 to 6000 m/min, or 4500 to 6000 m/min, or 4500 to 5500 m/min. In order to form filaments having an appropriate crystallinity, the spinning speed is preferably 4000 m/min or higher, or 4500 m/min or higher. However, when the spinning speed is excessively high, entanglement of the filaments may occur during the spinning process, and the uniformity of the nonwoven fabric may decrease. Therefore, the spinning speed is preferably 6000 m/min or less, or 5500 m/min or less.

The core-in-sheath type filaments are deposited on a continuously moving net conveyor by a conventional fiber opening method, such as an electrostatic charging method, a collision plate method, and an air flow diffusion method, thereby forming a fiber web.

Subsequently, a step of forming a spunbond nonwoven fabric by heat-treating the fiber web under pressure is performed.

This step may include thermally bonding filaments constituting the fiber web to obtain the spunbond nonwoven fabric. The heat treatment may be performed at a temperature in a range of 100 °C to 200 °C.

As an example, the fiber web may be passed through a roller heated to about 200 °C to obtain a spunbond nonwoven fabric having appropriate smoothness and thickness. In this step, a conventional device such as a calender roller, a smooth roller, and an embossing roller may be used. The roller may be heated to a temperature at which the sheath part of the core-in-sheath type filaments is meltable to an extent sufficient for bonding.

## [ADVANTAGEOUS EFFECTS]

According to the present invention, there is provided a spunbond nonwoven fabric for a filter exhibiting high stiffness despite a low weight per unit area, and a method for preparing the same.

## [DETAILED DESCRIPTION OF THE EMBODIMENTS]

Hereinafter, preferred embodiments are described to facilitate understanding of the present invention. However, the following embodiments are provided for illustrative purposes only, and the present invention is not limited thereto.

### Example 1

Polyethylene terephthalate (PET; first polyester) having an intrinsic viscosity of 0.65 dl/g and a melting point of 255 °C, and a copolyester (Co-PET; second polyester) having an intrinsic viscosity of 0.73 dl/g and a melting point of 230 °C were each melted at 280 °C using a continuous extruder.

The melts of the first polyester and the second polyester were continuously spun through a spinning pack equipped with a core-in-sheath type spinneret to obtain core-in-sheath type filaments each comprising a core part comprising the first polyester and a sheath part comprising the second polyester. At this time, a weight ratio of the core part to the sheath part was controlled to be 85:15. After solidifying the filaments with cooling air, the filaments were drawn using a high-pressure air drawing device such that a spinning speed was 5000 m/min, thereby obtaining filaments having a fineness of 2.9 denier.

The obtained filaments were deposited on a continuously moving net conveyor to form a fiber web. The fiber web was passed through a smooth roller and an embossing roller maintained at 200 °C and 35 N/mm, thereby preparing a spunbond nonwoven fabric.

### Example 2

A spunbond nonwoven fabric was prepared in the same manner as in Example 1, except that the discharge rate was adjusted such that the weight ratio of the core part to the sheath part was 80:20.

Example 3

A spunbond nonwoven fabric was prepared in the same manner as in Example 1, except that the discharge rate was adjusted such that the weight ratio of the core part to the sheath part was 75:25.

Example 4

A spunbond nonwoven fabric was prepared in the same manner as in Example 1, except that the copolyester (Co-PET) having an intrinsic viscosity of 0.71 dl/g and a melting point of 230 °C was used as the second polyester.

Comparative Example 1

Polyethylene terephthalate (PET; first polyester) having an intrinsic viscosity of 0.65 dl/g and a melting point of 255 °C, and a copolyester (Co-PET; second polyester) having an intrinsic viscosity of 0.73 dl/g and a melting point of 230 °C were each melted at 280 °C using a continuous extruder.

The melts of the first polyester and the second polyester were spun through a spinneret having circular cross-section discharge holes to respectively form first polyester filaments and second polyester filaments, each having a fineness of 2.9 denier.

The first polyester filament and the second polyester filament were intermingled such that a weight ratio thereof was 80:20, and deposited on a continuously moving net conveyor to form a fiber web.

The fiber web was passed through a smooth roller and an embossing roller maintained at 200 °C and 35 N/mm to prepare a spunbond nonwoven fabric.

Comparative Example 2

A spunbond nonwoven fabric was prepared in the same manner as in Example 1, except that the discharge rate was adjusted such that the weight ratio of the core part to the sheath part was 60:40.

Comparative Example 3

A spunbond nonwoven fabric was prepared in the same manner as in Example 1, except that the discharge rate was adjusted such that the weight ratio of the core part to the sheath part was 90:10.

Comparative Example 4

A spunbond nonwoven fabric was prepared in the same manner as in Example 3, except that the copolyester (Co-PET) having an intrinsic viscosity of 0.60 dl/g and a melting point of 230 °C was used as the second polyester.

Comparative Example 5

A spunbond nonwoven fabric was prepared in the same manner as in Example 3, except that the copolyester (Co-PET) having an intrinsic viscosity of 0.67 dl/g and a melting point of 230 °C was used as the second polyester.

[Table 1]

| | First Polyester | | Second Polyester | | Filament | | Nonwoven Fabric | |
|---|---|---|---|---|---|---|---|---|
| | I.V. (dl/g) | $T_m$ (°C) | I.V. (dl/g) | $T_m$ (°C) | Fineness (De) | Weight Ratio | Weight (g/m$^2$) | Density (g/cm$^3$) |
| Example 1 | 0.65 | 255 | 0.73 | 230 | 2.9 | 85:15 | 135 | 0.34 |
| Example 2 | 0.65 | 255 | 0.73 | 230 | 2.9 | 80:20 | 135 | 0.34 |
| Example 3 | 0.65 | 255 | 0.73 | 230 | 2.9 | 75:25 | 135 | 0.34 |
| Example 4 | 0.65 | 255 | 0.71 | 230 | 2.9 | 85:15 | 135 | 0.34 |
| Comparative Example 1 | 0.65 | 255 | 0.73 | 230 | 2.9 | 80:20 | 135 | 0.34 |
| Comparative Example 2 | 0.65 | 255 | 0.73 | 230 | 2.9 | 60:40 | - | - |

(continued)

| | First Polyester | | Second Polyester | | Filament | | Nonwoven Fabric | |
|---|---|---|---|---|---|---|---|---|
| | I.V. (dl/g) | $T_m$ (°C) | I.V. (dl/g) | $T_m$ (°C) | Fineness (De) | Weight Ratio | Weight (g/m$^2$) | Density (g/cm$^3$) |
| Comparative Example 3 | 0.65 | 255 | 0.73 | 230 | 2.9 | 90:10 | 135 | 0.34 |
| Comparative Example 4 | 0.65 | 255 | 0.60 | 230 | 2.9 | 75:25 | - | - |
| Comparative Example 5 | 0.65 | 255 | 0.67 | 230 | 2.9 | 75:25 | 135 | 0.34 |

Test Examples

(1) Intrinsic Viscosity

2.0±0.0001 g of a polyester sample used in the Examples and Comparative Examples was weighed and placed in a stoppered Erlenmeyer flask, and 25 mL of an organic solvent (ortho-chlorophenol) was added thereto. The flask was placed in a dissolution bath maintained at 100 °C, and the sample was dissolved in the organic solvent with stirring for 1 hour, followed by cooling in a constant-temperature bath at 25±0.5 °C for 20 minutes.

Thereafter, 7.5 mL of the sample solution was taken from the flask and introduced into a viscometer (CANNON CAV, Cannon Instrument Company, compliant with ASTM D445/446), and after equilibrating at 25±0.5 °C for 20 minutes, the intrinsic viscosity of the sample was measured.

(2) Stiffness (mgf)

A specimen (1 inch × 2.5 inch) of the spunbond nonwoven fabric according to the Examples and Comparative Examples was prepared. The stiffness (mgf) in the machine direction (MD) of the specimen was measured using a Gurley-type stiffness tester (Model 4171D) in accordance with the standard test method of JIS L 1913:2010.

(3) Air Permeability (cm$^3$/cm$^2$/sec)

The air permeability of the spunbond nonwoven fabric was measured under a pressure of 125 Pa using an air permeability tester (FX 3300 LabAir IV, TEXTEST Instruments) in accordance with the standard test method of ASTM D737-18(2023).

(4) Operability and Quality Evaluation

During the manufacturing process of the spunbond nonwoven fabric, when defects occurred in the nonwoven fabric due to filament agglomeration, filament breakage, or filament drop, the operability and quality were rated as "poor."

[Table 2]

| | Stiffness (mgf) | Air Permeability (cm$^3$/cm$^2$/sec) | Operability and Quality |
|---|---|---|---|
| Example 1 | 1067 | 76 | Good |
| Example 2 | 1156 | 72 | Good |
| Example 3 | 1245 | 69 | Good |
| Example 4 | 1022 | 79 | Good |
| Comparative Example 1 | 711 | 65 | Good |
| Comparative Example 2 | - | - | Poor |
| Comparative Example 3 | 918 | 71 | Good |
| Comparative Example 4 | - | - | Poor |
| Comparative Example 5 | 964 | 74 | Poor |

Referring to Tables 1 and 2, the spunbond nonwoven fabrics of the Examples exhibited a stiffness of 1022 mgf or

higher and an air permeability of 69 $cm^3/cm^2/sec$ or higher while having a weight per unit area and an apparent density equivalent to those of the Comparative Examples, and were confirmed to have good operability and quality.

In Comparative Example 1, although raw materials having the same composition as in Example 2 were used, the first polyester filament and the second polyester filament were applied in an intermingled form, and thus exhibited significantly lower stiffness and inferior air permeability compared to Example 2.

In Comparative Example 2, as the content of the second polyester was excessively high, cooling and drawing were not properly performed during the spinning process, and thus a spunbond nonwoven fabric could not be prepared.

In Comparative Example 3, as the content of the second polyester was excessively low, the spunbond nonwoven fabric exhibited lower stiffness and air permeability compared to the Examples.

In Comparative Example 4, since a second polyester having an excessively low intrinsic viscosity was used, filament bending occurred during the spinning process, defects were generated due to filament drop resulting in poor quality; furthermore, sufficient pressure in the spinning pack was not secured, thereby failing to form uniform filaments. As a result, a spunbond nonwoven fabric could not be prepared.

In Comparative Example 5, although a spunbond nonwoven fabric was prepared, filament bending occurred during the spinning process, and sufficient pressure in the spinning pack was not secured, thereby failing to form uniform filaments.

Although the present invention has been described with reference to limited embodiments, the present invention is not limited thereto, and various modifications and variations may be made by those skilled in the art without departing from the spirit and scope of the present invention as defined in the appended claims.

## Claims

**1.** A spunbond nonwoven fabric for a filter, comprising:

a fiber web comprising core-in-sheath type filaments,
wherein the core-in-sheath type filaments comprise a core part comprising a first polyester having a melting point of 250 °C or higher, and a sheath part comprising a second polyester having a melting point in a range of 160 °C to 235 °C,
wherein the core-in-sheath type filaments comprise the core part and the sheath part in a weight ratio in a range of 65:35 to 85:15, and
wherein the second polyester has an intrinsic viscosity (I.V.) higher than that of the first polyester by a value in a range of 0.05 dl/g to 0.1 dl/g.

**2.** The spunbond nonwoven fabric for a filter according to claim 1,
wherein the first polyester has an intrinsic viscosity in a range of 0.65 dl/g to 0.75 dl/g, and the second polyester has an intrinsic viscosity in a range of 0.70 dl/g to 0.85 dl/g.

**3.** The spunbond nonwoven fabric for a filter according to claim 1,
wherein the core-in-sheath type filaments have a fineness in a range of 2 denier to 5 denier.

**4.** The spunbond nonwoven fabric for a filter according to claim 1,
wherein the spunbond nonwoven fabric has an apparent density in a range of 0.30 $g/cm^3$ to 0.38 $g/cm^3$.

**5.** The spunbond nonwoven fabric for a filter according to claim 1,
wherein the spunbond nonwoven fabric has a weight per unit area in a range of 130 $g/m^2$ to 170 $g/m^2$.

**6.** The spunbond nonwoven fabric for a filter according to claim 1,
wherein the spunbond nonwoven fabric has a stiffness of 1000 mgf or higher.

**7.** The spunbond nonwoven fabric for a filter according to claim 1,
wherein the spunbond nonwoven fabric has an air permeability of 30 $cm^3/cm^2/sec$ or higher according to ASTM D737-18 (2023).

**8.** The spunbond nonwoven fabric for a filter according to claim 1,
wherein the spunbond nonwoven fabric has a stiffness in a range of 1000 mgf to 1300 mgf and an air permeability in a range of 30 $cm^3/cm^2/sec$ to 85 $cm^3/cm^2/sec$ under a weight per unit area of $135\pm5$ $g/m^2$.

**9.** A method for preparing a spunbond nonwoven fabric for a filter according to claim 1, the method comprising:

obtaining core-in-sheath type filaments comprising a core part comprising a first polyester and a sheath part comprising a second polyester by conjugate-spinning a first polyester having a melting point of 250 °C or higher and a second polyester having a melting point in a range of 160 °C to 235 °C;
forming a fiber web by depositing the core-in-sheath type filaments on a net conveyor; and
forming a spunbond nonwoven fabric by performing heat treatment of the fiber web under pressure,
wherein the core-in-sheath type filaments comprise the core part and the sheath part in a weight ratio in a range of 65:35 to 85:15, and
wherein the second polyester has an intrinsic viscosity (I.V.) higher than that of the first polyester by a value in a range of 0.05 dl/g to 0.1 dl/g.

**10.** The method for preparing a spunbond nonwoven fabric for a filter according to claim 9,
wherein the obtaining of the core-in-sheath type filaments is performed at a spinning speed in a range of 4000 m/min to 6000 m/min.

**11.** The method for preparing a spunbond nonwoven fabric for a filter according to claim 9,
wherein the heat treatment is performed at a temperature in a range of 100 °C to 200 °C.

## INTERNATIONAL SEARCH REPORT

International application No.
**PCT/KR2024/019957**

**A. CLASSIFICATION OF SUBJECT MATTER**

**D04H 3/011**(2012.01)i; **D04H 3/147**(2012.01)i; **D04H 3/018**(2012.01)i; **D01D 5/34**(2006.01)i; **D01F 6/62**(2006.01)i; **B01D 39/16**(2006.01)i; **D06C 15/02**(2006.01)i

According to International Patent Classification (IPC) or to both national classification and IPC

**B. FIELDS SEARCHED**

Minimum documentation searched (classification system followed by classification symbols)

D04H 3/011(2012.01); D01F 8/14(2006.01); D04H 3/009(2012.01); D04H 3/147(2012.01); D04H 3/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 부직포(non-woven fabric), 코어-인-시스(core-in-sheath, core-sheath), 융점(melting point), 고유점도(intrinsic viscosity), 필터(filter), 여과(filtration)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2005-0047793 A (KOLON CORPORATION) 23 May 2005 (2005-05-23) See claims 1 and 2; and paragraphs [0035]-[0037]. | 1-11 |
| Y | KR 10-2015-0011129 A (TORAY ADVANCED MATERIALS KOREA INC.) 30 January 2015 (2015-01-30) See claims 1 and 2; paragraph [0033]; and table 1. | 1-11 |
| A | KR 10-2011-0001501 A (KOLON INDUSTRIES, INC.) 06 January 2011 (2011-01-06) See claims 1-11. | 1-11 |
| A | KR 10-2022-0095129 A (KOLON INDUSTRIES, INC.) 06 July 2022 (2022-07-06) See claims 1-15. | 1-11 |
| A | KR 10-2009-0059306 A (TORAY SAEHAN INC.) 11 June 2009 (2009-06-11) See claims 1-4. | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 March 2025** | **31 March 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/019957**

| Patent document cited in search report | Publication date (day/month/year) | Patent family member(s) | Publication date (day/month/year) |
|---|---|---|---|
| KR 10-2005-0047793 A | 23 May 2005 | KR 10-0829087 B1 | 16 May 2008 |
| KR 10-2015-0011129 A | 30 January 2015 | KR 10-2036663 B1 | 25 October 2019 |
| KR 10-2011-0001501 A | 06 January 2011 | KR 10-1194359 B1 | 25 October 2012 |
| KR 10-2022-0095129 A | 06 July 2022 | KR 10-2617463 B1 | 27 December 2023 |
| | | TW 202231953 A | 16 August 2022 |
| | | TW I795143 B | 01 March 2023 |
| | | WO 2022-145874 A1 | 07 July 2022 |
| KR 10-2009-0059306 A | 11 June 2009 | None | |

Form PCT/ISA/210 (patent family annex) (July 2022)